# EUROPÄISCHE PATENTSCHRIFT

(11) **EP 1 529 639 B1**
(45) Veröffentlichungstag und Bekanntmachung des Hinweises auf die Patenterteilung: **08.08.2012**
(21) Anmeldenummer: 04105466.9
(22) Anmeldetag: 03.11.2004
(51) Int. Cl.: H02K 3/12, H02K 3/18, H02K 41/03

(54) **Transportsystem in einer Bedruckstoff verarbeitenden Maschine und Verfahren zur Herstellung eines Primärteils eines elektrischen Linearantriebs**
Device for conveying printing material in a machine and method for the production of a primary member of an electrical linear motor
Dispositif pour transporter des feuilles dans une machine à travailler des feuilles et procédé pour la fabrication d'une pièce primaire d'un moteur électrique linéaire

(30) Priorität: 05.11.2003 DE 10351619
(43) Veröffentlichungstag der Anmeldung: 11.05.2005
(73) Patentinhaber: Heidelberger Druckmaschinen Aktiengesellschaft, 69115 Heidelberg (DE)
(72) Erfinder: Frank, Hendrik, D-69115 Heidelberg (DE); Ballandt, Frank, Dr., D-01920 Ralbitz-Rosenthal (DE); Berger, Dietmar, 01156 Dresden-Altfranken (DE); Schaeffer, Thomas, Dr., 69256 Mauer (DE); Schleweis, Ivonne, 69242 Mühlhausen (DE)

(56) Entgegenhaltungen:
- US-A- 5 947 361

## Beschreibung

Die vorliegende Erfindung betrifft ein Transportsystem in einer Bedruckstoff verarbeitenden Maschine mit den Merkmalen des Oberbegriffs von Anspruch 1.

Weiterhin betrifft die vorliegende Erfindung ein Verfahren zur Herstellung eines Primärteils eines elektrischen Linearantriebs mit den Merkmalen des Oberbegriffs von Anspruch 9.

Es ist bekannt, in Bedruckstoff verarbeitenden Maschinen, z. B. in Druckmaschinen, den zu verarbeitenden Bedruckstoff, z. B. Bedruckstoffbogen (im Folgenden: Bogen), mittels eines Transportsystems basierend auf elektrischen Linearantrieben zu transportieren.

Es ist ferner bekannt, in Bedruckstoff verarbeitenden Maschinen, z. B. in Rollendruckmaschinen, eine zu verarbeitende Bedruckstoffbahn (im Folgenden: Bahn) mittels eines Transportsystems basierend auf elektrischen Linearantrieben vor dem eigentlichen Druckprozess in die Maschine einzuziehen.

Es ist weiterhin bekannt, Transportsysteme zu verzweigen und/oder zusammenzuführen und zu diesem Zweck mit schaltbaren Weichen auszustatten. Da die aufeinander folgenden Wagen oder Schlitten des Systems oft nur geringe Abstände zueinander aufweisen, ist es notwendig, Weichen mit kurzen Schaltzeiten und hoher Schaltdynamik vorzusehen.

Bekannte Weichen können als mechanisch aktive oder mechanisch passive Weichen ausgebildet sein, d. h. sie umfassen zur Änderung des Fahrweges bewegte mechanische Komponenten, z. B. Schienenabschnitte, oder nicht.

Dokument DE 196 21 507 Cl offenbart eine Bahneinzugsvorrichtung für bahnförmiges Material mit einer mechanisch aktiven Weiche. Die Vorrichtung weist dabei eine Führungsschiene, in welcher eine Zugeinrichtung zum Einziehen der Bahn bewegbar ist, auf. Der Vortrieb wird durch einen elektrischen Linearantrieb erzeugt, welcher einen Stator aus als Kerne magnetisierbaren Materials ausgebildete Elektromagneten mit jeweils darum gewickelten Spulen aufweist. Die Kerne können über Polbleche miteinander verbunden sein. Der Linearantrieb weist ferner als Läufer die Zugeinrichtung auf, an welcher zwei oder mehr Permanentmagnete oder aber geschlossene, elektrisch erregbare Spulen befestigt sind.

Die Zugeinrichtung kann als langgestreckte Gliederkette ausgebildet sein, deren Länge größer als der Abstand zweier benachbarter als Spulen ausgebildeter Antriebstationen ist.

Die Vorrichtung weist darüber hinaus eine oder mehrere schaltbare Weichen auf, die jeweils als drehbare Scheibe ausgebildet sind, auf welchen jeweils in unterschiedliche Richtungen gekrümmte Abschnitte der Führungsschiene angeordnet sind. In Abhängigkeit von der Drehstellung der Scheibe kann ein Bahnweg für den Einzug der Bahn eingestellt werden.

Beim Schalten der Weiche werden nur Abschnitte der Führungsschienen bewegt. Die Antriebsstationen bleiben stationär.

Die beschriebene Weiche kann nur in Verbindung mit der als Gliederkette ausgebildeten Zugeinrichtung eingesetzt zu werden, da im Bereich der Weiche keine Antriebsstationen vorgehen sind, und somit die Zugeinrichtung von der Weiche vor- oder nachgeordneten Antriebsstationen antriebsmäßig erfasst werden muss.

Aus dem Dokument EP 0 907 515 B1 ist ein Transportsystem für Bogen bekannt. In dem Dokument wird vorgeschlagen, in einer Bogenoffsetdruckmaschine ein auf elektrischen Linearantrieben basierendes Transportsystem vorzusehen, welches die Bogen mittels an Vortriebselementen angeordneten und als Greifer-Traversen ausgebildeten Bogenhaltemittel von einem ersten zu einem zweiten Druckwerk transportiert.

Dabei bestehen Einzelglieder der als Gliederketten ausgebildeten, die Läufer des Antriebs bildende Vortriebselemente aus magnetischem Material, z. B. aus Permanentmagneten. Die den Stator des Antriebs bildende Antriebsstationen enthalten bekannte elektromagnetische Spulen, die ein elektromagnetisches Wanderfeld zum Vortrieb der Vortriebselemente erzeugen.

Das Transportsystem weist eine Führungseinrichtung mit einer mechanisch passiven Weiche auf, welche beispielsweise durch zwei zusätzliche Antriebsstationen gebildet werden kann, die am Anfang eines jeweiligen Verzweigungspfades des Transportsystems angeordnet sind und die entsprechend dem einzuschlagenden Pfad wechselweise bestromt werden (d. h. gezielte Zu- und Abschaltung elektromagnetischer Felder in Teilen des Transportpfades zur Erzeugung von Seitenführungskräften), wodurch die Vortriebselemente in den einen oder den anderen Pfad gefördert werden.

Die vorgeschlagene Lösung weist das Problem auf, dass die vorgesehene Ausgestaltung der Weiche als mechanisch passive Weiche, d. h. ohne bewegte Komponenten, zwar eine schnelle Schaltung der Weiche und eine hinterschneidungsfreie Anordnung der sich verzweigenden Pfade erlaubt, jedoch in Bezug auf die Führungsgenauigkeit der Vortriebselemente im Bereich der Weiche verglichen mit der steifen Führung bei mechanisch aktiven Weichen unerwünscht begrenzt sein kann.

Ferner sind Personentransportsysteme basierend auf elektrischen Linearantrieben bekannt, bei denen schaltbare Weichen zur Verzweigung der Transportpfade vorgesehen sind.

Ein solches System ist jeweils in der JP 59-6763 A und in der JP 5-140903 A beschrieben. Die dort beschriebenen schaltbaren Weichen sind derart ausgelegt, dass nicht nur Führungseinrichtungen, z. B. Schienenabschnitte, bewegt werden, sondern mit diesen zusammen auch der Stator des Antriebs. Somit weist ein solches System das Problem auf, dass zum Schalten bzw. zum Stellen der Weiche massereiche Elemente bewegt werden müssen, so dass ein schnelles Schalten der Weiche mit kurzen Schaltzeiten nicht möglich erscheint. Ein langsames Schalten erscheint im Bereich der Personentransportsysteme jedoch akzeptabel, da die einzelnen Züge des Systems große Abstände zueinander aufweisen.

Weiterhin sind aus dem Bereich der Personentransportsysteme basierend auf elektrischen Linearantrieb (z. B. beim Transrapid) auch Schwenk- oder Biegeweichen bekannt, bei welchen sowohl die Schienenabschnitte als auch der Stator durch Biegung bewegt werden.

Hierzu sind jedoch hohe Stellkräfte und weite Stellwege erforderlich, was zu einer geringen Stelldynamik führt.

Schließlich ist auch das Austauschen des gesamten Abschnitts des Transportsystems inklusive Schienen und Stator im Bereich der Weiche möglich, was jedoch auch aufgrund der zu bewegenden Massen keine hohe Schaltdynamik erlaubt.

Es ist eine Aufgabe der vorliegenden Erfindung, ein Transportsystem in einer Bedruckstoff verarbeitenden Maschine zu schaffen, welches zumindest einen der aufgezeigten Nachteile des Standes der Technik überwindet.

Es ist eine weitere oder alternative Aufgabe der vorliegenden Erfindung, ein verbessertes Transportsystem in einer Bedruckstoff verarbeitenden Maschine zu schaffen.

Es ist eine weitere oder alternative Aufgabe der Erfindung, ein Transportsystem in einer Bedruckstoff verarbeitenden Maschine zu schaffen, welches eine schnell schaltende oder schnell schaltbare Weiche aufweist.

Es ist eine weitere oder alternative Aufgabe der Erfindung, ein Transportsystem in einer Bedruckstoff verarbeitenden Maschine zu schaffen, welches eine Weiche mit sehr genauen Führungseigenschaften aufweist.

Es ist eine weitere oder alternative Aufgabe der Erfindung, ein Transportsystem in einer Bedruckstoff verarbeitenden Maschine zu schaffen, welches schnell schaltende oder schnell schaltbare mechanische Komponenten einer Weiche aufweist.

Es ist eine weitere oder alternative Aufgabe der Erfindung, ein Transportsystem in einer Bedruckstoff verarbeitenden Maschine zu schaffen, welches kostengünstig herzustellen ist.

Diese Aufgaben werden erfindungsgemäß durch ein Transportsystem mit den Merkmalen des Anspruchs 1 gelöst.

Es ist auch eine Aufgabe der vorliegenden Erfindung, ein verbessertes Verfahren zur Herstellung eines Primärteils eines elektrischen Linearantriebs bereitzustellen.

Es ist weitere oder alternative eine Aufgabe der Erfindung, ein Verfahren zur Herstellung eines Primärteils eines elektrischen Linearantriebs bereitzustellen, welches eine einfache Durchführung erlaubt.

Es ist eine weitere oder alternative Aufgabe der Erfindung, ein Verfahren zur Herstellung eines Primärteils eines elektrischen Linearantriebs bereitzustellen, welcher für den Einsatz in schnell schaltenden oder schnell schaltbaren Weichen geeignet ist.

Diese Aufgaben werden erfindungsgemäß durch ein Verfahren zur Herstellung eines Primärteils eines elektrischen Linearantriebs mit den Merkmalen des Anspruchs 9 gelöst.

Vorteilhafte Weiterbildungen der Erfindung sind in den Unteransprüchen enthalten.

Ein erfindungsgemäßes Transportsystem in einer Bedruckstoff verarbeitenden Maschine mit
- einer Führungseinrichtung, welche wenigstens eine Weiche aufweist,
- wenigstens einem entlang der Führungseinrichtung bewegbaren Läufer, und
- einem elektrischen Linearantrieb, welcher ein Wickelkerne umfassendes Primärteil und ein den Läufer umfassendes Sekundärteil aufweist,
zeichnet sich dadurch aus,
dass im Bereich der Weiche wenigstens ein Wickelkern zur Bildung einer Aussparung für wenigstens ein Führungssegment der Führungseinrichtung eine gegenüber der Höhe von Wickelkernen außerhalb des Bereichs der Weiche geringere Höhe aufweist.

Die Wickelkerne (oder Zähne) des Primärteils sind - wie üblich - derart angeordnet, dass zwischen den Wickelkernen Nuten gebildet werden, in denen die Wicklungen, welche um die Wickelkerne gelegt sind, aufgenommen sind.

Das erfindungsgemäße Transportsystem weist ein besonders ausgebildetes Primärteil des elektrischen Linearantriebs auf. Erfindungsgemäß ist wenigstens ein Wickelkern im Bereich der Weiche von geringerer Höhe als Wickelkerne außerhalb des Bereichs der Weiche.

Die durch die geringere Höhe des Wickelkerns bereitgestellte Aussparung im Primärteil erlaubt in vorteilhafter Weise die Aufnahme von wenigstens einem Führungssegment, beispielsweise eines Schienenstücks.

Auf diese einfache Weise kann eine Weiche im Transportsystem gebildet werden, indem an der Verzweigung Führungseinrichtungen, z. B. Schienen, durch die Aussparung im Primärteil geführt werden. Die Schienen sind zumindest im Bereich der Aussparung vorteilhafterweise aus nicht metallischem Material, z. B. Kunststoff. Von Vorteil ist dabei, dass alle Elemente des elektrischen Linearantriebs ortsfest angeordnet werden können, und beim Umstellen oder Schalten der Weiche nicht mit den zu bewegenden Führungseinrichtungen mitbewegt werden müssen, so dass ein sehr schneller Schaltvorgang bzw. eine hohe Schaltdynamik erreicht werden kann. Auch ein Biegen der Transporteinrichtung kann mit Vorteil vermieden werden.

Ein weiterer Vorteil der Erfindung ist darin zu finden, dass die Läufer des Linearantriebs, d. h. die Wagen oder Schlitten des Transportsystems, auch im Bereich der Weiche ständig unter dem antreibenden Einfluss des elektrischen Linearantrieb stehen und folglich ein sicheres und präzises Führen der Wagen auch im Bereich der Weiche ermöglicht ist.

Ein erfindungsgemäßes Transportsystem stellt somit eine steife und damit genaue mechanische Führung bereit, erlaubt aber auch den schnellen Pfadwechsel durch hochdynamisch und unabhängig voneinander schaltbare, segmentierte Führungselemente. Einen jeweiligen weiteren Vorteil der Erfindung bildet die Trennung des Antriebssystems (Elektrischer Linearanteils) von den mechanischen Schaltelementen (segmentierte Führungselemente oder Schienenstücke) die Realisierung von Schaltzeiten, die geringer sind, als die Durchfahrtszeiten eines Läufers (Wagens) durch die Weiche und die Möglichkeit des Umschaltens der Weiche auch während der Anwesenheit eines Läufers im Bereich der Weiche.

Ein erfindungsgemäßes Transportsystem kann in Bogendruckmaschinen, insbesondere in Bogenoffsetrotationsdruckmaschinen, zum Transportieren, Fördern, Ein- und Ausschleusen von Bogen eingesetzt werden.

Ein erfindungsgemäßes Transportsystem kann ferner in Rollendruckmaschinen, insbesondere in Rollenoffsetrotationsdruckmaschinen, zum Transportieren, Fördern oder Einziehen von einer oder mehreren Bahnen eingesetzt werden.

Ein erfindungsgemäßes Transportsystem kann ferner in Falzapparaten zum Transportieren von Signaturen oder Falzprodukten eingesetzt werden.

Ein erfindungsgemäßes Transportsystem kann ferner in Nachbearbeitungsmaschinen (Postpress-Maschinen), insbesondere in Klebemaschinen, Bindemaschinen, Stanzen, Stapelmaschinen oder Verpackungsmaschinen zum Transportieren oder Fördern von Druckprodukten eingesetzt werden.

Ein erfmdungsgemäßes Transportsystem kann ferner in Digitaldruckmaschinen, insbesondere in Kopieren, zum Transportieren oder Fördern von Bedruckstoff eingesetzt werden.

Ein erfindungsgemäßes Transportsystem kann darüber hinaus auch in der Druckvorbereitungsstufe (in Prepress-Maschinen), insbesondere in Plattenbelichtern, zum Transportieren oder Fördern von Druckplatten anstelle von Bedruckstoff eingesetzt werden.

Eine Ausführungsform des erfindungsgemäßen Transportsystems zeichnet sich dadurch aus, dass die Wickelkerne bezüglich der Höhe von Wickelkernen außerhalb des Bereichs der Weiche nur in einem unteren Abschnitt mit Wicklungen versehen sind. Es können alle Wickelkerne oder nur Wickelkerne im Bereich der Weiche auf diese Weise ausgebildet sein.

In weiterer Ausgestaltung der Erfindung zeichnet sich ein Transportsystem dadurch aus, dass die Wickelkerne bezüglich der Höhe von Wickelkernen außerhalb des Bereichs der Weiche nur in einem unteren Abschnitt von weniger als etwa 75% oder 50% der Höhe, insbesondere von weniger als etwa 40% oder 30% oder 25% der Höhe, mit Wicklungen versehen sind.

Ferner kann sich eine bevorzugte Ausführung des erfindungsgemäßen Transportsystems dadurch auszeichnen, dass das wenigstens eine Führungssegment ortsfest in der Aussparung angeordnet ist.

Gemäß einer weiteren bevorzugten Ausführung zeichnet sich das erfindungsgemäße Transportsystem dadurch aus, dass das wenigstens eine Führungssegment zumindest teilweise in die Aussparung oder seitlich an die Aussparung heran bewegbar, insbesondere linear bewegbar oder schwenkbar, ausgestaltet ist.

Es ist darüber hinaus gemäß einer weiteren bevorzugten Ausführung des erfindungsgemäßen Transportsystems möglich, dass das wenigstens eine Führungssegment zwischen einer passiven Position und einer aktiven Position bewegbar ist.

In weiterer bevorzugter Ausgestaltung des erfindungsgemäßen Transportsystems, ist ein weiteres Führungssegment zwischen der aktiven Position und einer weiteren passiven Position bewegbar.

Ein erfindungsgemäßes Verfahren zur Herstellung eines Primärteils eines elektrischen Linearantriebs, bei welchem eine Anzahl von Wickelkernen des Primärteils mit Wicklungen versehen wird, zeichnet sich dadurch aus, dass die Anzahl von Wickelkernen bezüglich ihrer Höhe nur in einem unteren Abschnitt mit Wicklungen versehen wird und dass wenigstens ein Wickelkern mit geringerer Höhe hergestellt wird.

Das erfindungsgemäße Verfahren erlaubt in vorteilhafter Weise die einfache Herstellung besonderer Primärteile elektrischer Linearantriebe. Auf solche Weise hergestellte Primärteile können mit Vorteil in Transportsystemen eingesetzt werden, welche mit Verzweigungen und an den Verzweigungen angeordneten Weichen ausgestattet sind.

Die erfindungsgemäß hergestellten Primärteile erlauben durch das Herstellen wenigstens eines Wickelkerns mit geringerer Höhe den ausgesparten Raum über dem Wickelkern mit geringerer Höhe für Führungseinrichtungen, z. B. Schienen, zu nutzen, so dass die Schienen durch das Primärteil hindurchführbar sind und auf diese Weise des Primärteil im Bereich einer Weiche Einsatz finden kann.

Ein weiterer Vorteil des erfindungsgemäßen Herstellungsverfahrens ist darin zu finden, dass auf einfache Weise Primärteile für elektrische Linearantriebe produzierbar sind, die ein unterbrechungsfreies und störungsfreies Antreiben eines Läufers des Antriebs auch im Bereich von Weichen erlauben.

In weiterer Ausführung zeichnet sich ein erfindungsgemäßes Verfahren dadurch aus, dass die Anzahl von Wickelkernen bezüglich ihrer Höhe nur in einem unteren Abschnitt von weniger als etwa 75% oder 50% der Höhe, insbesondere von weniger als etwa 40% oder 30% oder 25% der Höhe, mit Wicklungen versehen wird.

Ferner kann sich eine bevorzugte Ausführung des erfindungsgemäßen Verfahrens dadurch auszeichnen, dass die Herstellung der geringeren Höhe des wenigstens einen Wickelkerns spanend, insbesondere fräsend oder schleifend, oder nichtspanend, insbesondere stanzend, erfolgt.

Die Erfindung sowie weitere Vorteile der Erfindung werden nachfolgend unter Bezug auf die Zeichnungen anhand eines bevorzugten Ausführungsbeispiels näher beschrieben.

Die Zeichnungen zeigen:
- Figur 1: eine schematische Seitenansicht eines Druckwerks mit einem erfindungsgemäßen Transportsystem;
- Figur 2: eine Schnittansicht des erfindungsgemäßen Transportsystems;
- Figur 3: eine perspektivische Draufsicht auf ein erfindungsgemäßes Transportsystem;
- Figur 4: eine perspektivische Draufsicht auf ein erfindungsgemäßes Transportsystem;
- Figur 5: eine schematische Draufsicht auf den Bereichs der Weiche eines erfindungsgemäßen Transportsystems in einer ersten Weichenstellung;
- Figur 6: eine perspektivische Draufsicht auf den Bereichs der Weiche eines erfindungsgemäßen Transportsystems in einer ersten Weichenstellung;
- Figur 7: eine schematische Draufsicht auf den Bereichs der Weiche eines erfindungsgemäßen Transportsystems in einer zweiten Weichenstellung;
- Figur 8: eine perspektivische Draufsicht auf den Bereichs der Weiche eines erfindungsgemäßen Transportsystems in einer zweiten Weichenstellung;
- Figur 9: eine Schnittansicht durch das Primärteil der Führungseinrichtung im Bereich der Weiche;
- Figur 10: eine perspektivische Draufsicht auf ein erfindungsgemäßes Transportsystem mit einer Weichenstelleinheit aus einer ersten Perspektive;
- Figur 11: eine perspektivische Draufsicht auf ein erfindungsgemäßes Transportsystem mit einer Weichenstelleinheit aus einer zweiten Perspektive;
- Figur 12: eine Simulationsrechnung;
- Figur 13: Ergebnisse der Simulationsrechnung als Diagramm; und
- Figur 14: Ergebnisse der Simulationsrechnung als Diagramm.

In den Figuren sind übereinstimmende Merkmale mit denselben Bezugszeichen versehen.

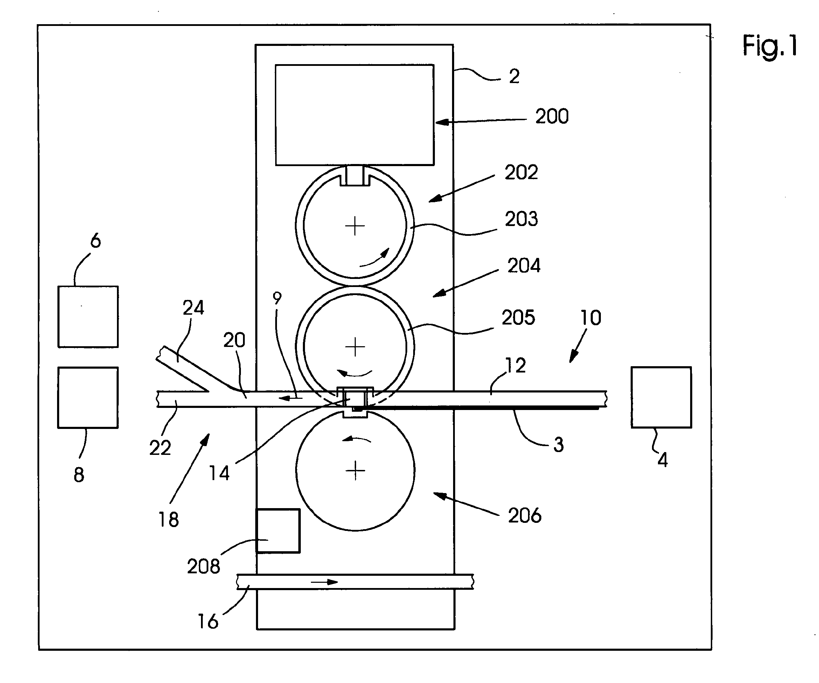

Figur 1 zeigt eine schematische Seitenansicht eines Druckwerks 2 einer Bedruckstoff 3 (z. B. in Form von Bedruckstoffbogen) verarbeitenden Druckmaschine 1. Dem Druckwerk 2 sind wenigstens eine Einheit 4, z. B. eine weiteres Druckwerk oder ein Bogen-Anleger, vorgeordnet und wenigstens zwei Einheiten 6, 8, z. B. weitere Druckwerke, Lackwerke, Trockner, Bogen-Ausleger oder Drucknachverarbeitungseinrichtungen (beispielsweise Schneidemaschinen, Falzapparate, Stanzen, Bindemaschinen oder Verpackungsstationen), nachgeordnet.

Das Druckwerk weist ein Farb- und/oder Feuchtwerk 200 mit Walzen, einen Formzylinder 202 mit einer aufgespannten Druckform 203 (z. B. Druckplatte oder Druckhülse), einen Übertragungszylinder 204 mit einem aufgespannten Übertragungstuch 205 (z. B. Gummituch oder Gummituchhülse) und einen Gegendruckzylinder 206 auf. Weiterhin kann das Druckwerk 2 einen separaten Motor 208 zum Antreiben der Zylinder und Walzen aufweisen oder das Druckwerk kann von einem gemeinsamen Antrieb mehrerer Druckwerke angetrieben werden.

Die zu verarbeitenden Bogen 3 werden von der Einheit 4 zum Druckwerk 2 und weiter in Bewegungsrichtung 9 zu wenigstens einer der beiden Einheiten 6, 8 transportiert. Hierzu umfasst die Druckmaschine 1 ein Transportsystem 10 für die Bogen 3, welches sich entlang des Transportpfades erstreckt und welches wenigstens eine Führungseinrichtung 12 und wenigstens einen entlang der Führungseinrichtung verfahrbaren Wagen 14, an welchem die Bogen 3 gehalten werden, aufweist. Die Wagen 14 werden auf einem Rückführabschnitt 16 des Transportsystems 10 zur Einheit 4 zurück geführt.

Zur Vereinfachung der Darstellung ist in Figur 1 nur eine Führungseinrichtung 12 dargestellt. Bevorzugt kann das Transportsystem jedoch sich gegenüberliegende Führungseinrichtungen auf jeder Seite der Druckmaschine aufweisen, welche zum Führen des Wagens 14 im Wesentlichen demselben Bahnpfad folgen.

Figur 1 ist zu entnehmen, dass das Transportsystem eine Weiche 18 aufweist, an der ein erster Pfad 20 der Führungseinrichtung 12 in einen zweiten und dritten Pfad 22, 24 der Führungseinrichtung 12 verzweigt. Die Weiche ist somit an einer Verzweigung des Transportpfades angeordnet.

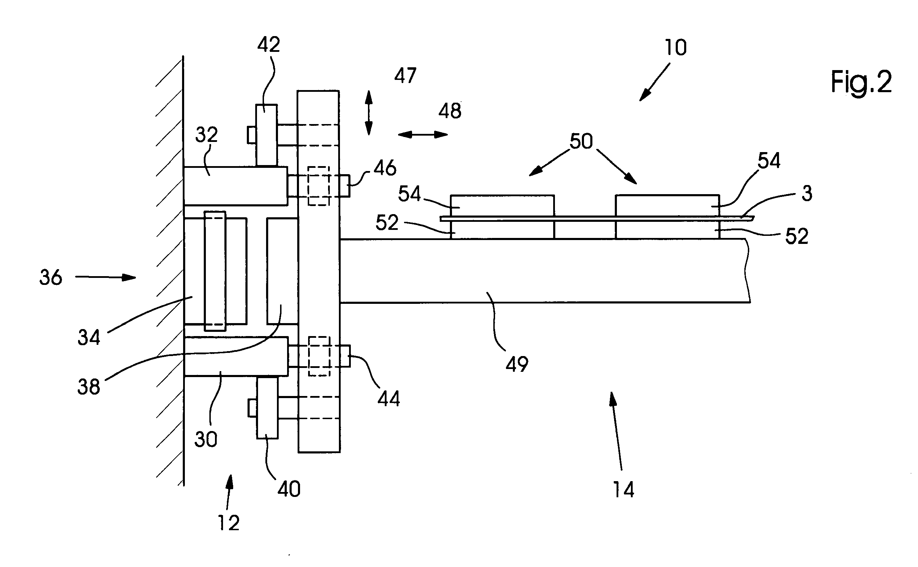

Figur 2 zeigt eine Schnittansicht des Transportsystems 10. Dabei ist zur vereinfachten Darstellung nur ein seitlicher Endabschnitt eines Wagens 14 und eine diesen Endabschnitt führende Führungseinrichtung 14 gezeigt, welche z. B. an einer Seitenwand der Druckmaschine 1 oder des Druckwerks 2 angeordnet sein kann. Der Wagen kann jedoch mit seinem gegenüberliegenden weiteren (nicht dargestellten) seitlichen Endabschnitt ebenfalls in einer Führungseinrichtung geführt sein, welche vorzugsweise an der gegenüberliegenden Wand der Druckmaschine oder des Druckwerks angeordnet ist.

Die Führungseinrichtung 12 des Transportsystems 10 umfasst zwei zueinander beabstandete Schienen 30, 32 (welche in der Figur in die Zeichenebene hinein verlaufen), zwischen denen ein Primärteil 34 eines elektrischen Linearmotors 36 angeordnet ist. Das Sekundärteil 38 des elektrischen Linearmotors 36 umfasst den als Läufer ausgebildeten Wagen 14, einen Abschnitt 38 des Wagens 14 oder ein am Wagen 14 angeordnetes Element 38. Alternativ bildet der Wagen 14, ein Abschnitt 38 des Wagens 14 oder ein am Wagen 14 angeordnetes Element 38 das Sekundärteil 38 des elektrischen Linearmotors 36.

Der Wagen 14 stützt sich über Räder 40, 42, 44, 46 an den Schienen 30, 32 derart ab, dass der Wagen sowohl in senkrechter Richtung 47 als auch in lateraler Richtung 48 zum Schienenverlauf sicher geführt ist, d. h. im Wesentlichen keine Bewegungen ausführen kann, und in Richtung des Schienenverlaufs (in der Figur in die Zeichenebene hinein) bewegbar ist. Die magnetischen Anzugskräfte zwischen 38 und 34 wirken als Gegenlager zu den Rädern 44, 46.

Ferner weist der Wagen 14 eine Traverse 49 auf, an welcher Greifereinheiten 50 angeordnet sind, wobei die Greifereinheiten 50 den zu transportierenden bzw. zu verarbeitenden Bogen 3 zwischen Greiferauflagen 52 und bewegbaren Greifern 54 halten.

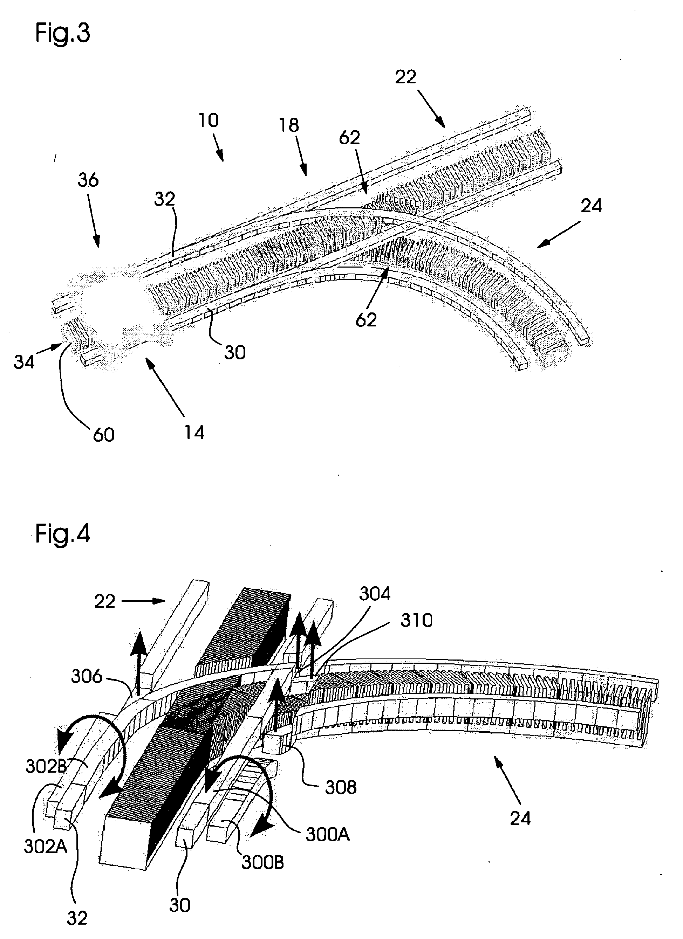

In Figur 3 ist das erfindungsgemäße Transportsystem 10 im Bereich der Weiche dargestellt.

Als Bereich der Weiche kann der Bereich verstanden werden, der sich entlang der Führungseinrichtung 12 im Wesentlichen über die Verzweigung der Führungseinrichtung 12 hinweg erstreckt. Dabei kann ein jeweiliger Abschnitt des ersten, zweiten oder dritten Pfades 20, 22, 24, welcher der Verzweigung unmittelbar vor- oder nachgeordnet ist, auch zum Bereich der Weiche gezählt werden. Insbesondere kann als Bereich der Weiche der Bereich des Transportsystems verstanden werden, in dem das Transportsystem, die Führungseinrichtung oder das Primärteil des elektrischen Linearantriebs Elemente der Weiche aufweist.

Im engeren Sinn kann als Bereich der Weiche auch nur der Bereich verstanden werden, in dem, wie unten näher erläutert, Schienen der Führungseinrichtung durch Aussparungen (alternative Bezeichnung: Durchbrüche), welche im Primärteil vorgesehen sind, geführt werden.

Zwischen den Schienen 30, 32 erstreckt sich erkennbar das Primärteil 34 des elektrischen Linearantriebs 36 und an den Schienen abgestützt ist der bewegbare (alternativ: verschiebbare, verfahrbare oder vortreibbare) Wagen 14 gezeigt.

Die Figur 3 zeigt zugleich die beiden möglichen Pfade 22, 24 des Wagens 14 nach Verlassen der Weiche 18. Die genaue Stellung bzw. Positionierung der Schienen 30, 32 im Bereich der Weiche ist in den weiteren Figuren deutlich dargestellt.

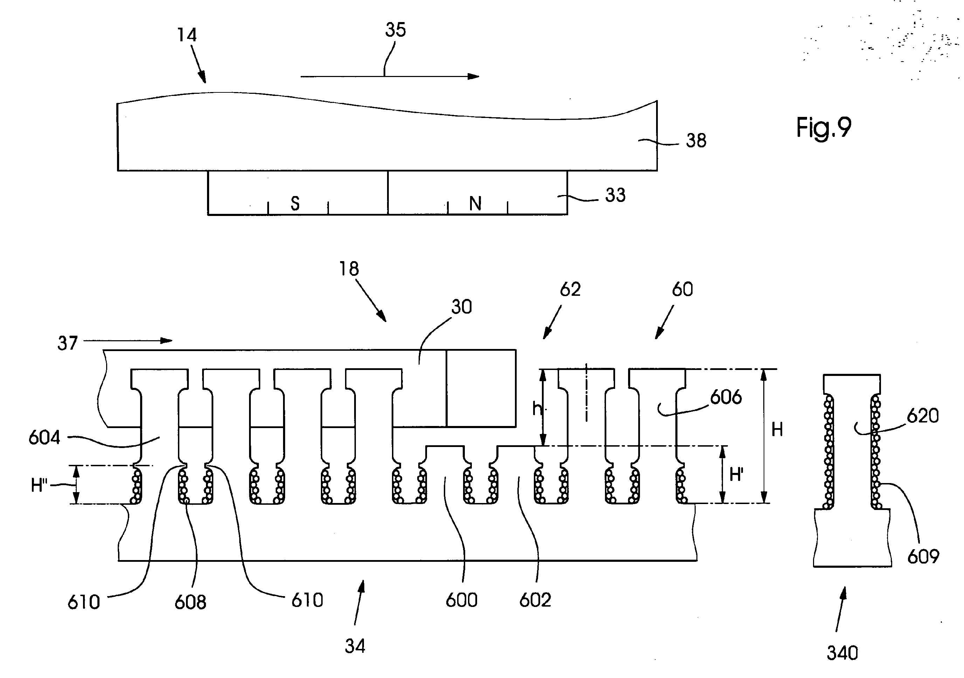

Wie Figur 3 entnommen werden kann, setzt sich das Primärteil 34 aus in Pfadrichtung aufeinanderfolgenden Wickelkernen 60 (alternative Bezeichnung: Wickelköpfe, Polelemente oder Statorzähne) zusammen, welche zum Tragen von Wicklungen (siehe auch Figur 9) ausgelegt sind. Im Bereich der Weiche 18 weisen zumindest einige Wickelkerne bzw.
Zähne 60 (ganz oder teilweise) eine geringere Höhe auf, derart, dass eine Aussparung 62 im Primärteil 34 entsteht, in welcher Abschnitte oder Segmente der Schienen 30, 32 aufgenommen oder aufnehmbar sind, z. B. durch Anordnen, Verschwenken und/oder lineares Bewegen bzw. durch Austauschen (siehe auch Figur 4).

Die Aussparungen ermöglichen das ungehinderte Hindurchtreten der Schienen 30, 32 durch das Primärteil 34 im Bereich der Weiche 18.

In Figur 4 ist durch Pfeile dargestellt, wie das Stellen der Weiche 18 durch Verschwenken und/oder lineares Bewegen von Segmenten bzw. durch Austauschen von Segmenten der Schienen 30, 32 erreicht werden kann.

Durch gemeinsames Verschwenken und folglich Austauschen von Segmenten 300A, 300B sowie 302A, 302B kann zwischen auslaufenden Pfad 22 (Geradeaus-Richtung) und auslaufendem Pfad 24 (Abzweig-Richtung) verstellt bzw. gewechselt werden. Die Segmente 300A, 300B zeigen in Figur 4 die Stellung für Geradeaus-Führung während die Segmente 302A, 302B in Figur 4 die Stellung für Kurven-Führung zeigen (diese Darstellung soll lediglich die verschiedenen Stell-Möglichkeiten aufzeigen, in der Anwendung werden beide Segmentpaare einheitlich gestellt, d. h. entweder in Geradeaus- oder in Kurvenrichtung).

Die jeweiligen Segmente 304, 306 der beiden Schienen 30, 32 können durch lineares Aufund Abbewegen zwischen zwei Positionen verstellt werden, wobei in der unteren oder abgesenkten Position Aussparungen für die Räder des Wagen freigegeben werden, so dass der Wagen einer Kurve hin zu Pfad 24 folgen kann, während in einer oberen oder angehobenen Position die Schienen in Geradeaus-Richtung im Wesentlichen lückenlos geschlossen werden, so dass der Wagen geradeaus hin zu Pfad 22 geführt werden kann.

Weiterhin können auch die Segmente 308, 310 aus einer jeweiligen unteren in eine jeweilige obere Position verschwenkt und/oder linear bewegt werden. Dabei geben die Segment 308, 310 in ihrer unteren Position die Geradeaus-Richtung frei, während sie in ihrer oberen oder angehobenen Position Lücken der Schienen 30, 32 in der abzweigenden Richtung schließen.

Weitere in der Figur 4 gezeigte Segmente der Schienen 30, 32, insbesondere im Bereich der Weiche, sind ortsfest angeordnet.

Die beschriebenen Segmente werden durch eine Segmentierung der Führungseinrichtung in Bewegungsrichtung gebildet.

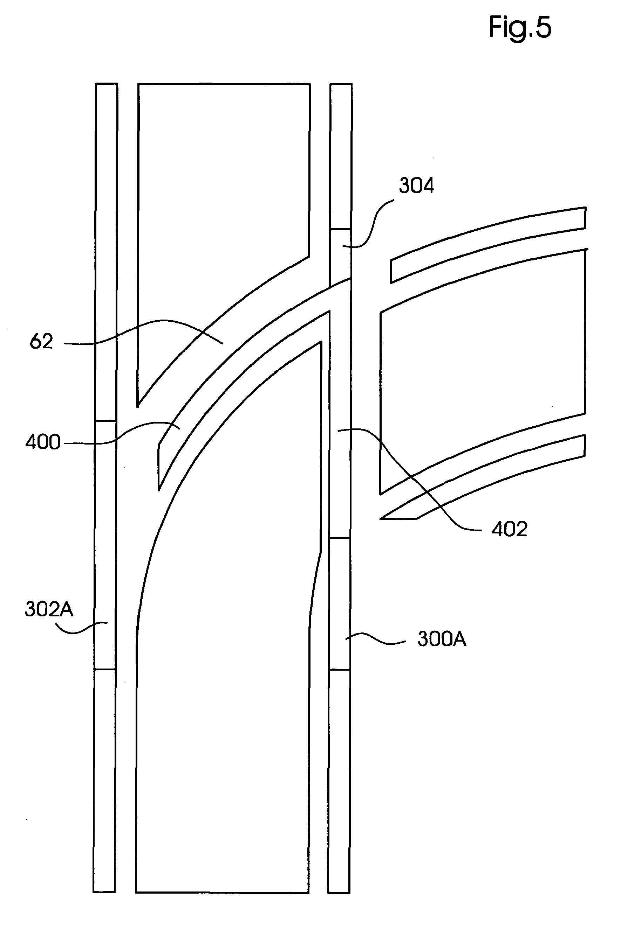

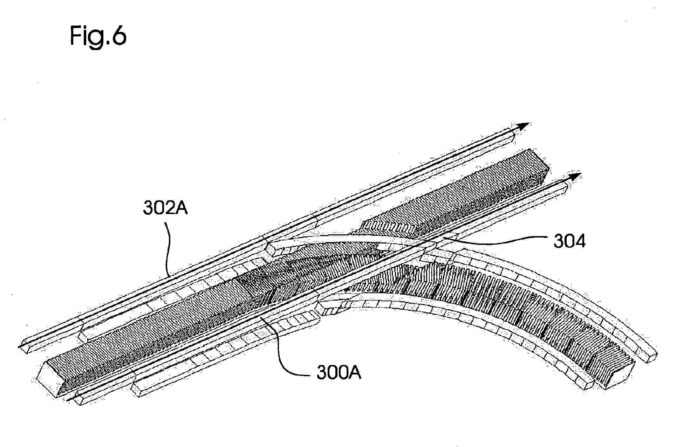

In den Darstellungen der Figuren 5 und 6 ist zu erkennen, welche Segmente in welcher Position zur Stellung der Weiche in Geradeaus-Richtung (erste Stellung der Weiche) angeordnet werden.

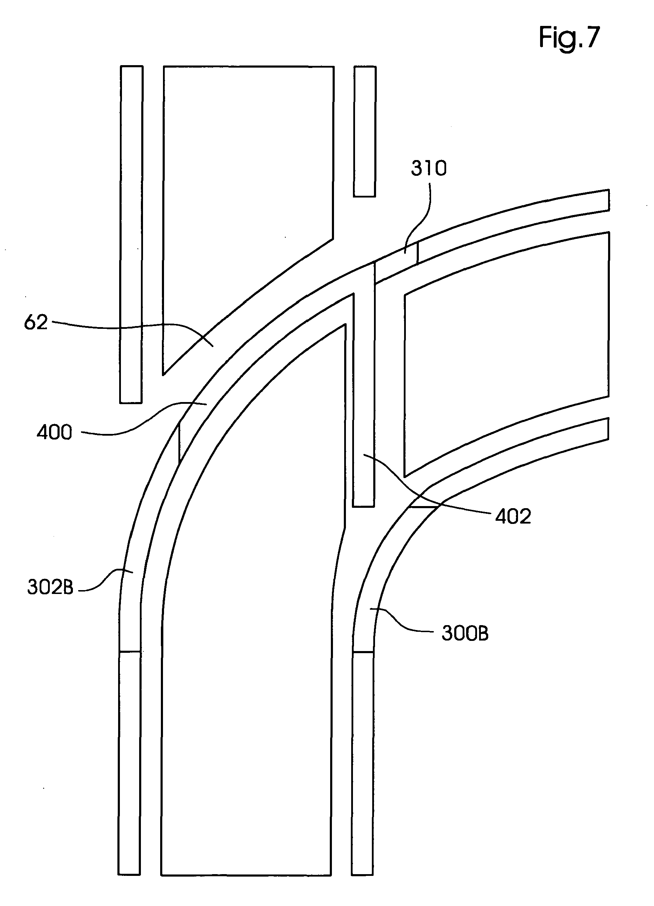

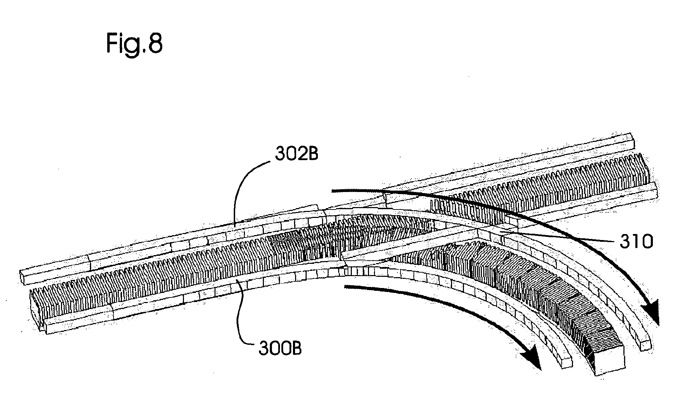

In den Darstellung der Figuren 7 und 8 ist zu erkennen, welche Segmente in welcher Position zur Stellung der Weiche in Abzweig-Richtung (zweite Stellung der Weiche) angeordnet werden.

Bei der ersten Stellung der Weiche sind die Segmente 300A und 302A in ihrer jeweiligen aktiven Position, ebenso Segment 304. Demgegenüber sind bei der zweiten Stellung der Weiche die Segment 300B, 302B und 310 in ihrer jeweiligen aktiven Position. Aktive Position ist dabei so zu verstehen, dass die betroffenen Segmente Teile des Schienenverlauf sind. In einer entsprechenden passiven Position (oder: Park-Position) sind die betroffenen Segmente nicht Teil des Schienenverlauf.

In den Figuren 5 und 7 sind ferner ortsfest in einer Aussparung 62 des Primärteils angeordnete Führungssegmente 400, 402 dargestellt.

Die in Figur 9 gezeigte Schnittansicht durch das Primärteil 34 lässt die Wickelkerne 60 aus magnetisierbarem Material erkennen, wobei im Bereich der Weiche 18 zwei Wickelkerne 600, 602 gegenüber der Höhe H von Wickelkernen 604, 606 außerhalb des Bereichs der Weiche 18 eine geringere (oder: verringerte oder reduzierte) Höhe H' aufweisen. Dadurch ergibt sich eine Aussparung 62 der Höhe h, durch welche die Schienen 30 (oder auch 32) ungehindert verlaufen können.

Die Wickelkerne 60 des Primärteil 34 - sowohl diejenigen der Höhe H als auch diejenigen der Höhe H' - sind lediglich bis zu einer vorzugsweise einheitlichen Höhe H" von Wicklungen 608 (oder: Spulen) umgeben, wobei die Höhe H"<=H' ist. Die Wicklungen 608 können von an den Wickelkernen 60 angeordneten Nasen 610 fixiert werden, wobei die Nasen 610 vorzugsweise an allen Wickelkernen 60 in derselben Höhe (im Wesentlichen H") angeordnet sind. Die Nasen 610 können ferner von Vorsprüngen an den Wickelkernen 60 gebildet werden.

Figur 9 zeigt des Weiteren auch den als Wagen oder Schlitten 14 ausgebildetes Sekundärteil 38, d. h. den Läufer des Antriebs, welcher durch einen Luftspalt 37 beabstandet vom Primärteil 34 bewegbar angeordnet ist. Im dargestellten Beispiel ist am Wagen 14 zur Kupplung wenigstens ein Permanentmagnet 33 (alternativ: ein Läuferkäfig einer Asynchronmaschine) angeordnet. Anstelle des Permanentmagneten 33 kann auch ein magnetisierbarer Wickelkern und eine elektrisch erregbare Spule vorgesehen sein. Die Wicklungen 608, insbesondere Drehstromwicklungen, des Primärteils 34, d. h. des Stators, erzeugen bei entsprechender Bestromung ein magnetisches Wanderfeld, d. h. ein Feld das sich entlang des Primärteils 34 fortbewegt, an welches das magnetische Feld des Permanentmagneten 33 koppelt und durch welches der Permanentmagnet 33 und somit auch der Wagen 14 in Bewegungsrichtung 35 in bekannter Weise mitgeführt und vorgetrieben wird.

Obgleich in Figur 9 nicht erkennbar, kann das Primärteil 34 (und insbesondere die Wickelkerne 60) aus vielen Schichten gegeneinander isolierter Elektrobleche bestehen und ein Statorblechpaket bilden. Die Vortriebsbewegung des Wagens 14 kann in üblicher Weise durch nicht dargestellte Steuerungs- oder Regelungseinrichtungen, welche die Bestromung der Wicklungen 608 steuern oder regeln, in gewünschter Weise beeinflusst werden, d. h. der Wagen 14 kann z. B. beschleunigt oder gebremst, mit konstanter Geschwindigkeit, abstandshaltend zu weiteren Wagen oder registergerecht bewegt werden.

Primärteile 340 außerhalb des Bereichs der Weiche, insbesondere in den Pfaden 20, 22 und 24, können in konventioneller Weise Wicklungen 609 aufweisen, die im Wesentlichen die volle Höhe der Wickelkerne 620 nutzen und somit einen optimierten Füllfaktor aufweisen und eine größer magnetische Flussdichte im Spalt erzeugen. Auf diese Weise kann in vorteilhafter Weise erreicht werden, dass nur im Bereich der Weiche hohe Wickelkerne mit geringem Füllfaktor eingesetzt werden.

Das in Figur 9 dargestellte Primärteil 34 kann Teil eines Weichenbauteils sein, so dass der in dieser Anmeldung verwendete Begriff "innerhalb des Bereichs der Weiche" auch derart verstanden werden kann, dass damit im Bereich des Weichenbauteils gemeint ist, während das Primärteil 340 Teil eines (weichenlosen) Streckenbauteils sein kann, so dass der in dieser Anmeldung verwendete Begriff "außerhalb des Bereichs der Weiche" auch derart verstanden werden kann, dass damit im Bereich des Streckenbauteils gemeint ist.

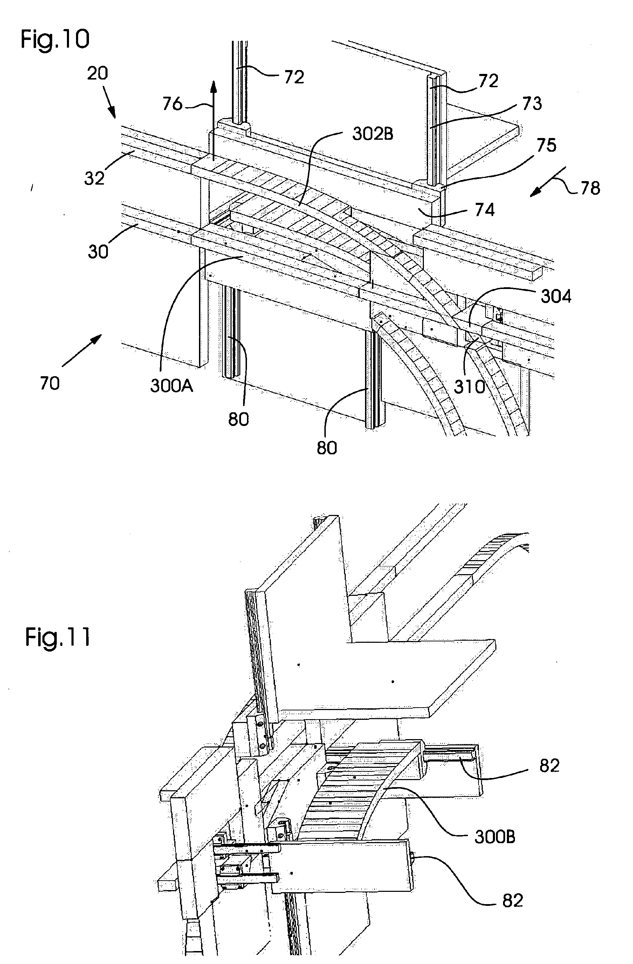

Die in der Figur 10 gezeigte Weichenstelleinheit 70 (Vorderansicht) umfasst eine Linearführung 72 (mit Schiene 73) für ein Montageelement 74 (alternative Bezeichnung: Grundplatte), an welchem das Segment 302B der Schiene 32 angeordnet ist. Bei einer Umstellung bzw. beim Schalten der Weiche 18 kann das Segment 302B aus seiner aktiven Position linear entlang der Linearführung (in der Figur nach oben) in seine passive Position bewegt werden. Diese Bewegung wird durch den Pfeil 76 verdeutlicht. Dabei findet die lineare Verstellbewegung im wesentlichen senkrecht zur Richtung des einlaufenden Pfads 20 und in der von den beiden Schienen 30, 32 aufgespannten Ebene statt.

Danach oder auch im Wesentlichen simultan kann das Segment 302A aus seiner passiven Position (in Figur 10 hinter der Montageplatte 74, nicht sichtbar) linear entlang einer Linearführung (in der Figur nach vorne, siehe Bewegungsrichtung 78) aus seiner passiven Position in die aktive Position bewegt werden. Diese Verstellbewegung erfolgt im wesentlichen senkrecht zur Richtung des einlaufenden Pfads 20 und senkrecht zu der von den beiden Schienen 30, 32 aufgespannten Ebene.

Desgleichen können die Segmente 300A, 3(10B (siehe auch Figur 11) mittels Linearführungen 80, 82 verstellt werden.

Auch die Segmente 304, 310 können mittels Linearführungen abwechselnd aus passiven in aktive Positionen und zurück bewegt werden.

In Figur 11 ist die Weichenstelleinheit von hinten (Rückansicht) gezeigt, wobei Segment 300B in seiner passiven Position zu sehen ist.

Es ist weiterhin möglich, anstelle der horizontalen und vertikalen Stellvorrichtungen für die Segmente auch windschiefe orientierte Stellvorrichtungen vorzusehen.

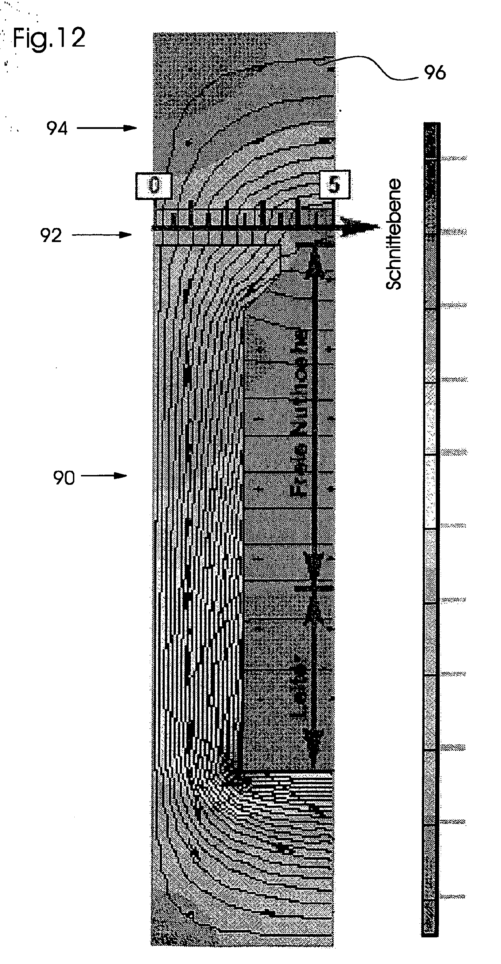

In den Figuren 12, 13 und 14 ist eine Simulationsrechung der magnetischen Flussdichte B für einen bezüglich seiner Höhe nur teilweise umwickelten Wickelkern dargestellt.

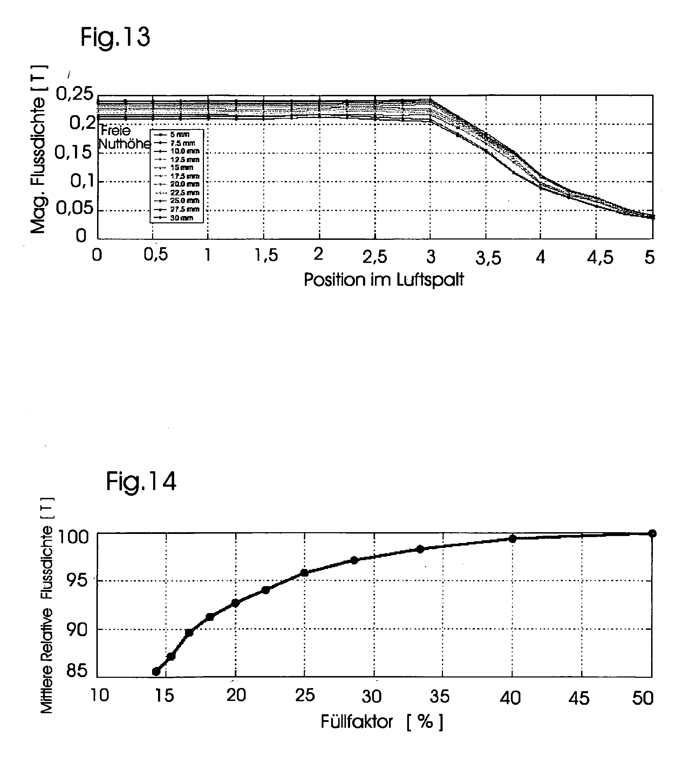

Figur 12 zeigt ausschnittsweise einen simulierten Wickelkern 90 und einen darüber befindlichen, durch einen Luftspalt 92 von Wickelkern 90 getrennten (beabstandeten) Permanentmagneten 94 sowie die Feldlinien 96 der magnetischen Flussdichte B in diesem Ausschnitt. Die in der Figur verwendeten Grauwerte deuten den Betrag der magnetischen Flussdichte B an. Die Ziffern 0 und 5 deuten die Position im Luftspalt an, wie sie im Diagramm in Figur 13 auf der Abszisse aufgetragen ist.

In Figur 13 ist ein Diagramm dargestellt, in welchem die magnetische Flussdichte B (in Tesla) über der Position im Luftspalt 92 (siehe Ziffern 0 und 5 in Figur 12) für verschiedene freie Höhen des Wickelkerns 90 aufgetragen ist. Als freie Höhen des Wickelkerns ist dabei der Abschnitt der Wickelkerns zu verstehen, welcher nicht von einer Spule umwickelt ist. Man erkennt deutlich, dass das variable (siehe verschiedene eingezeichnete Kurven), nur teilweise Umwickeln des Wickelkerns lediglich einen geringen Einfluss auf die magnetische Flussdichte B hat. Ferner ist die magnetische Flussdichte über etwa 3/5 des Spaltbereichs (0 bis 3) im Wesentlichen konstant.

In Figur 14 ist ein Diagramm dargestellt, in welchem die mittlere relative Flussdichte (in Tesla) über dem Füllfaktor (in %) aufgetragen ist. Als "Füllfaktor" ist dabei der prozentuale Anteil der umwickelten Höhe des Wickelkern an der Gesamthöhe des Wickelkern zu verstehen. Es ist hier deutlich zu erkennen, dass die mittlere relative Flussdichte mit zunehmendem Füllfaktor gegen 100 % konvergiert, ab etwa Füllfaktor=25% über 90 % beträgt und schon bei etwa Füllfaktor=50% bereits etwa 100 % des Maximalflusses erreicht.

### Bezugszeichenliste

- 1: Bedruckstoff verarbeitende Maschine
- 2: Druckwerk
- 3: Bedruckstoff
- 4: vorgeordnete Einheit
- 6, 8: nachgeordnete Einheiten
- 9: Bewegungsrichtung
- 10: Transportsystem
- 12: Führungseinrichtung
- 14: Läufer, Wagen
- 16: Rückführabschnitt
- 18: Weiche
- 20: erster Pfad
- 22: zweiter Pfad
- 24: dritter Pfad
- 30,32: Schienen
- 33: Permanentmagnet/Läuferkäfig einer Asynchronmaschine
- 34: Primärteil/Stator
- 35: Bewegungsrichtung
- 36: elektrischer Linearmotor
- 37: Luftspalt
- 38: Sekundärteil/Läufer
- 40, 42, 44, 46: Räder
- 47,48: Richtungen
- 49: Traverse
- 50: Greifereinheit
- 52: Greiferauflage
- 54: Greifer
- 60: Wickelkern/Polelement/Zahn
- 62: Aussparung
- 70: Weichenstelleinheit
- 72: Linearführung
- 73: Schiene
- 74: Montageelement
- 75: Kugelumlaufeinheit
- 76: Bewegungsrichtung
- 78: Bewegungsrichtung
- 80, 82: Linearführung
- 90: Wickelkern/Polelement
- 92: Luftspalt
- 94: Permanentmagnet
- 96: Feldlinien
- 200: Farb- und/oder Feuchtwerk
- 202: Formzylinder
- 203: Druckform
- 204: Übertragungszylinder
- 205: Übertragungstuch
- 206: Gegendruckzylinder
- 208: Motor
- 300A, 300B: Segmente
- 302A, 302B: Segmente
- 304, 306: Segmente
- 308,310: Segmente
- 340: Primärteil
- 400, 402: Segmente
- 600, 602: Wickelkerne/Polelement
- 604, 606: Wickelkerne/Polelement
- 608: Wicklungen
- 609: Wicklungen
- 610: Nasen
- 620: Wickelkern

## Patentansprüche

1. Transportsystem in einer Bedruckstoff verarbeitenden Maschine mit
- einer Führungseinrichtung (12), welche wenigstens eine Weiche (18) aufweist,
- wenigstens einem entlang der Führungseinrichtung (12) bewegbaren Läufer (14), und
- einem elektrischen Linearantrieb (36), welcher ein Wickelkerne (60) umfassendes Primärteil (34) und ein den Läufer (14) umfassendes Sekundärteil (38) aufweist,
**dadurch gekennzeichnet,**
**dass** im Bereich der Weiche (18) wenigstens ein Wickelkern (600, 602) zur Bildung einer Aussparung (62) für wenigstens ein Führungssegment (30, 300A, 302B, 400, 402) der Führungseinrichtung (12) eine gegenüber der Höhe (H) von Wickelkernen (60) außerhalb des Bereichs der Weiche (12) geringere Höhe (H') aufweist.

2. Transportsystem nach Anspruch 1,
**dadurch gekennzeichnet,**
**dass** die Wickelkerne (60, 600, 602) bezüglich der Höhe (H) von Wickelkernen (60) außerhalb des Bereichs der Weiche (12) nur in einem unteren Abschnitt (H', H") mit Wicklungen (608) versehen sind.

3. Transportsystem nach Anspruch 2,
**dadurch gekennzeichnet,**
**dass** die Wickelkerne (60, 600, 602) bezüglich der Höhe (H) von Wickelkernen (60) außerhalb des Bereichs der Weiche (12) nur in einem unteren Abschnitt (H', H") von weniger als etwa 75% oder 50% der Höhe (H), insbesondere von weniger als etwa 40% oder 30% oder 25% der Höhe (H), mit Wicklungen (608) versehen ist.

4. Transportsystem nach einem der Ansprüche 1 bis 3,
**dadurch gekennzeichnet,**
**dass** das wenigstens eine Führungssegment (30, 400, 402) ortsfest in der Aussparung angeordnet ist.

5. Transportsystem nach einem der Ansprüche 1 bis 3,
**dadurch gekennzeichnet,**
**dass** das wenigstens eine Führungssegment (30, 300A, 300B, 302A, 302B, 304, 310) zumindest teilweise in die Aussparung (62) oder an die Aussparung (62) heran bewegbar, insbesondere linear bewegbar oder schwenkbar, ausgestaltet ist.

6. Transportsystem nach Anspruch 5,
**dadurch gekennzeichnet,**
**dass** das wenigstens eine Führungselement (30, 300A, 300B, 302A, 302B, 304, 310) zwischen einer passiven Position und einer aktiven Position bewegbar ist.

7. Transportsystem nach Anspruch 6,
**dadurch gekennzeichnet,**
**dass** ein weiteres Führungssegment (30, 300A, 300B, 302A, 302B, 304, 310) zwischen der aktiven Position und einer weiteren passiven Position bewegbar ist.

8. Bedruckstoff verarbeitenden Maschine, insbesondere Druckmaschine,
**gekennzeichnet durch**
ein Transportsystem nach einem der Ansprüche 1 bis 7.

9. Verfahren zur Herstellung eines Primärteils eines elektrischen Linearantriebs, bei welchem eine Anzahl von Wickelkernen (60, 600, 602) des Primärteils (34) mit Wicklungen (608) versehen wird,
**dadurch gekennzeichnet,**
**dass** die Anzahl von Wickelkerne (60, 600, 602) bezüglich ihrer Höhe (H) nur in einem unteren Abschnitt (H', H") mit Wicklungen (608) versehen wird und dass wenigstens ein Wickelkern (600, 602) mit geringerer Höhe (H') hergestellt wird.

10. Verfahren nach Anspruch 9,
**dadurch gekennzeichnet,**
**dass** die Anzahl von Wickelkernen (60) bezüglich ihrer Höhe nur in einem unteren Abschnitt (H') von weniger als etwa 75% oder 50% der Höhe (H), insbesondere von weniger als etwa 40% oder 30% oder 25% der Höhe (H), mit Wicklungen (608)
versehen wird.

11. Verfahren nach Anspruch 9 oder 10,
**dadurch gekennzeichnet,**
**dass** die Herstellung der geringeren Höhe (H') des wenigstens einen Wickelkerns (600, 602) spanend, insbesondere fräsend oder schleifend, oder nichtspanend, insbesondere stanzend, erfolgt.

## Claims

1. Transport system in a machine processing printing material including
- a guide device (12) that includes at least one switch (18),
- at least one rotor (14) movable along the guide device (12), and
- an electric linear drive (36) including a primary part (34) comprising winding cores (60) and a secondary part (38) comprising the rotor (14),
**characterized in**
**that** in the region of the switch (18), at least one winding core (600, 602) has a reduced height (H') compared to the height (H) of winding cores (60) outside the region of the switch (12) in order to form a recess (62) for at least one guide segment (30, 300A, 302B, 400, 402) of the guide device (12).

2. Transport system according to Claim 1,
**characterized in**
**that** with respect to the height (H) of winding cores (60) outside the region of the switch (12), the winding cores (60, 600, 602) are only provided with coils (608) in a lower section (H', H").

3. Transport system according to Claim 2,
**characterized in**
**that** with respect to the height (H) of winding cores (60) outside the region of the switch (12) the winding cores (60, 600, 602) are only provided with coils (608) in a lower section (H', H") of less than approximately 75% or 50% of the height (H), in particular of less than approximately 40% or 30% or 25% of the height (H).

4. Transport system according to one of Claims 1 to 3,
**characterized in**
**that** the at least one guide segment (30, 400, 402) is fixed in position in the recess.

5. Transport system according to one of Claims 1 to 3,
**characterized in**
**that** the at least one guide segment (30, 300A, 300B, 302A, 302B, 304, 310) is designed to be movable, in particular linearly movable or swivellable, at least partly into the recess (62) or towards the recess (62).

6. Transport system according to Claim 5,
**characterized in**
**that** the at least one guide element (30, 300A, 300B, 302A, 302B, 304, 310) is movable between a passive position and an active position.

7. Transport system according to Claim 6,
**characterized in**
**that** a further guide segment (30, 300A, 300B, 302A, 302B, 304, 310) is movable between the active position and a further passive position.

8. Machine processing printing material, in particular printing press,
**characterized by**
a transport system according to one of Claims 1 to 7.

9. Method for manufacturing a primary part of an electric linear drive in which a number of winding cores (60, 600, 602) of the primary part (34) are provided with coils (608), **characterized in**
**that** with respect to their height (H), the number of winding cores (60, 600, 602) are only provided with coils (608) in a lower section (H', H") and
**that** at least one winding core (600, 602) of smaller height (H') is produced.

10. Method according to Claim 9,
**characterized in**
**that** with respect to their height, the number of winding cores (60) are only provided with coils in a lower section (H') of less than approximately 75% or 50% of the height (H), in particular of less than approximately 40% or 30% or 25% of the height (H).

11. Method according to Claim 9 or 10,
**characterized in**
**that** the smaller height (H') of the at least one winding core (600, 602) is manufactured by machining, in particular milling or grinding, or in a non-machining process, in particular a punching process.

## Revendications

1. Système de transport dans une machine à traiter un substrat imprimé, comprenant
- un dispositif de guidage (12) qui présente au moins un aiguillage (18),
- au moins un rotor (14) mobile le long du dispositif de guidage (12), et
- un entraînement linéaire électrique (36) qui présente une pièce primaire (34) entourant un noyau (60) et une pièce secondaire (38) entourant le rotor (14),
**caractérisé en ce que**
dans la zone de l'aiguillage (18), au moins un noyau (600, 602) présente une hauteur (H') inférieure à la hauteur (H) de noyaux (60) à l'extérieur de la zone de l'aiguillage (12),
pour la formation d'un évidement (62) pour au moins un segment de guidage (30, 300A, 302B, 400, 402) du dispositif de guidage (12).

2. Système de transport selon la revendication 1,
**caractérisé en ce que**
les noyaux (60, 600, 602) sont munis d'enroulements (608) seulement dans une section intérieure (H', H") par rapport à la hauteur (H) de noyaux (60) à l'extérieur de la zone de l'aiguillage (12).

3. Système de transport selon la revendication 2,
**caractérisé en ce que**
les noyaux (60, 600, 602) sont munis d'enroulements (608), par rapport à la hauteur (H) de noyaux (60) à l'extérieur de la zone de l'aiguillage (12), seulement dans une section intérieure (H', H") de moins que environ 75 % ou 50 % de la hauteur (H), en particulier de moins que environ 40 % ou 30 % ou 25 % de la hauteur (H).

4. Système de transport selon l'une des revendications 1 à 3,
**caractérisé en ce qu'**au
moins un segment de guidage (30, 400, 402) est disposé stationairement dans l'évidement.

5. Système de transport selon l'une des revendications 1 à 3,
**caractérisé en ce que**
au moins un segment de guidage (30, 300A, 300B, 302A, 302B, 304, 310) est réalisé mobile au moins partiellement dans l'évidement (62) ou sur l'évidement (62), en particulier mobile de manière linéaire ou pivotante.

6. Système de transport selon la revendication 5,
**caractérisé en ce qu'**au moins un élément de guidage (30, 300A, 300B, 302A, 302B, 304, 310) est mobile entre une position passive et une position active.

7. Système de transport selon la revendication 6,
**caractérisé en ce qu'**un autre segment de guidage (30, 300A, 300B, 302A, 302B, 304, 310) est mobile entre la position passive et une autre position active.

8. Machine de traitement de substrat imprimé, en particulier une machine d'impression **caractérisée par** un système de transport selon l'une des revendications 1 à 7.

9. Procédé pour la fabrication d'une pièce primaire d'un entraînement linaire électrique dans lequel un nombre de noyaux (60, 600, 602) de la pièce primaire (34) sont munis d'enroulements (608),
**caractérisé en ce que** le nombre de noyaux (60, 600, 602) sont munis d'enroulements (608) seulement dans une section intérieure (H', H") par rapport à leur hauteur (H) et **en ce qu'**au moins un noyau (600, 602) est fabriqué avec une hauteur inférieure (H").

10. Procédé selon la revendication 9,
**caractérisé en ce que**
le nombre de noyaux (60) sont munis d'enroulements (608) par rapport à leur hauteur seulement dans une section intérieure (H') de moins que environ 75 % ou 50 % de la hauteur (H), en particulier de moins que environ 40 % ou 30 % ou 25 % de la hauteur (H).

11. Procédé selon la revendication 9 ou 10,
**caractérisé en ce que**
la fabrication de la hauteur plus faible (H') d'au moins un noyau (600, 602) est effectué par enlèvement de copeaux, en particulier par fraisage ou ponçage, ou bien sans enlèvement de copeaux, en particulier par poinçonnage.
